(19) Europäisches Patentamt
European Patent Office
Office européen des brevets

(11) **EP 2 066 997 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **07802188.8**

(22) Anmeldetag: **06.09.2007**

(51) Int Cl.:
***G01B 7/00*** *(2006.01)*

(86) Internationale Anmeldenummer:
**PCT/EP2007/007792**

(87) Internationale Veröffentlichungsnummer:
**WO 2008/040432 (10.04.2008 Gazette 2008/15)**

(54) **ENTFERNUNGSMESSUNG DURCH GESTEUERTE MAGNETFELDER**

RANGE MEASUREMENT BY CONTROLLED MAGNETIC FIELDS

MESURE DE DISTANCE PAR CHAMP MAGNÉTIQUE COMMANDÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.09.2006 DE 102006046372**

(43) Veröffentlichungstag der Anmeldung:
**10.06.2009 Patentblatt 2009/24**

(73) Patentinhaber: **Fraunhofer-Gesellschaft zur Förderung der angewandten Forschung e.V.
80686 München (DE)**

(72) Erfinder: **HERZER, Elmar
91052 Erlangen (DE)**

(74) Vertreter: **Stöckeler, Ferdinand
Schoppe, Zimmermann, Stöckeler & Zinkler
Patentanwälte
Postfach 246
82043 Pullach bei München (DE)**

(56) Entgegenhaltungen:
**US-A- 4 520 311    US-A1- 2005 146 327
US-B1- 6 549 004**

**Beschreibung**

Die vorliegende Erfindung bezieht sich auf das Messen von Entfernungen, basierend auf gesteuerten Magnetfeldern, wie es beispielsweise bei der Abstandsmessung im Nahbereich, d. h. im Bereich von $\mu$m bis cm; z. B. bei der Positionsmessung/Lagebestimmung von mikromechanischen Elementen vorkommt.

Magnetische Abstandsmessung mit statischer Erregung, die zumeist mit Hilfe von Permanentmagneten erzeugt wird, wird in den meisten Anwendungen nur schaltend benutzt, d.h. es wird detektiert, ob ein Magnetfeld überhaupt vorhanden ist, respektive ob es seine Richtung verändert hat.

Magnetfeldsensoren werden bei der Messung linearer Verschiebungen zumeist entweder als Detektoren für Zähne eines Maßstabs, z. B. durch Erkennung der Modulation eines Backbiasfeldes oder zur Erkennung eines Wechsels der Magnetisierungsrichtung eines magnetischen Maßstabs eingesetzt.

Ortsbestimmung wird häufig durch Wechselfelder realisiert, wobei sowohl magnetische als auch elektrische Felder zum Einsatz kommen, wie beispielsweise in "A New Method for Magnetic Position and Orientation Tracking", Paperno, Sasada, Leonovich, IEEE Transactions on Magnetics, Band 37, Nr. 4, Juli 2001 beschrieben wird. Die US 4,346,384 beschreibt beispielsweise eine Vorrichtung und ein Verfahren zur Bestimmung der Position und Orientierung eines Objektes relativ zu einer Referenzkoordinate. Dabei werden elektromagnetische Felder erzeugt, die orthogonale Komponenten aufweisen und somit von entsprechenden Empfangsantennen an dem Objekt unterschieden werden können. Der Abstand zwischen Sensor und Empfangsantennen ist dabei derart gewählt, dass Nahfeldkomponenten vernachlässigbar sind. Aus den empfangenen elektromagnetischen Feldkomponenten kann dann die Position und die Orientierung des Objektes bestimmt werden. Beispielsweise können auch lediglich zwei orthogonale Komponenten für das elektromagnetische Feld verwendet werden, wodurch sich die Komplexität und die Rechenzeit zur Bestimmung der Position und der Orientierung des Objektes reduzieren lässt.

Anwendungen, die die direkt messbare Gleichkomponente eines magnetischen Feldes verwenden, sind relativ selten. Dabei kann die Feldstärke eines Permanentmagneten als Signal zur Bestimmung einer Distanz direkt gemessen werden, vgl. z. B. Hall Applications Guide, www.melexis.com.

Abstände im Nahbereich werden zumeist kapazitiv gemessen. Eine Messung eines elektrisch erzeugten magnetischen Gleichfeldes wird fast ausschließlich zur Strommessung benutzt. Eine Anwendung zum Messen einer Distanz bzw. einer Position ist in der US 4,945,305 bzw. DE 69013108 T2 zu finden. Die US 4,945,305 bzw. die DE 69013108 T2 beschreiben dabei eine Vorrichtung zum Messen der Position von Empfangsantennen relativ zu Sendeantennen unter Verwendung von Gleichstromsignalen. Dabei sind bei der Positionsbestimmung sechs Freiheitsgrade vorgesehen, nämlich eine translatorische Bewegung in drei Koordinatenrichtungen und Rotationsbewegungen um drei Koordinatenachsen, wobei der Ort üblicherweise durch lineare X-, Y- und Z-Koordinaten definiert ist. Die Sendeantennen weisen dabei zwei zueinander nicht parallel angeordnete Antennen auf, um wenigstens zwei Gleichstrom-Magnetvektoren zu erzeugen und die Empfangsantennen wenigstens zwei nicht parallel zueinander angeordnete Antennen umfassen, um die Gleichstrom-Magnetvektoren zu erfassen. Dabei entspricht die Anzahl der Sendeantennen und die Anzahl der Empfangsantennen wenigstens der Anzahl der Freiheitsgrade der gewünschten qualitativen Messung der Position bzw. der Orientierung. Aus der mit Hilfe der Empfangsantennen bestimmten Gleichstrom-Magnetvektoren lassen sich dann die Position und die Orientierung der Empfangsantennen relativ zu den Sendeantennen bestimmen.

Die verschiedenen Methoden zur Abstandsmessung mit Hilfe von Magnetfeldern machen sich dabei das Grundprinzip zunutze, dass das Magnetfeld von einer einzelnen Quelle generiert wird. Bei der Erzeugung des Magnetfelds mit Permanentmagneten tritt dabei das Problem auf, dass Permanentmagneten Fertigungsstreuungen unterliegen und aufgrund der temperaturabhängigen Magnetfeldstärke nur grobe Messungen ermöglichen, bzw. neben einer Kalibrierung der Quelle und des Magnetfeldsensors auch eine Kompensation der Drifteffekte erfordern. Je nach Aufgabenstellung kann dabei ein erheblicher Aufwand an Kompensationsschaltung und eine ständige Nachkalibrierung der Quelle bzw. des Sensors notwendig sein.

Bei der Erzeugung von Magnetfeldern an einem Ort mit Hilfe von elektrischem Strom muss ebenfalls eine konstante Amplitude des generierten Magnetfeldes sichergestellt werden, was eine ständige Kontrolle der Stromamplitude notwendig macht.

Um am Ort des Magnetfeldsensors eine gute Signalamplitude messbar zu machen, ist es generell notwendig, dass die erzeugten Magnetfelder ebenfalls eine relativ große Amplitude aufweisen. Bei Verwendung von Wechselfeldern kommt dies einer Störungsaussendung gleich, der durch die Vorschriften zur elektromagnetischen Verträglichkeit Grenzen gesetzt sind. Werden hingegen Frequenzbänder benutzt, in denen große Amplituden möglich sind, so können diese Felder leicht durch andere Geräte beeinträchtigt werden, die ebenfalls in diesen Frequenzbändern aktiv sind.

Ein weiteres Problem der Entfernungsbestimmung mit Hilfe von nur einer Magnetfeldquelle besteht darin, dass die magnetische Feldstärke der Magnetfeldquelle bekannt sein sollte, das bedeutet, dass diese kalibriert sein sollte und dass eine absolute Kalibrierung der Empfängerempfindlichkeit des Magnetfeldsensors ebenfalls benötigt wird. Diese absolut kalibrierten Systeme sind nur sehr schwer und mit erheblichem Aufwand auf einem IC zu integrieren, da dort Absolutwerte großen Schwankungen unterliegen.

Eine Alternative stellt die Benutzung des Feldes eines magnetischen Dipols dar, erfordert allerdings aufwändige mathematische Berechnungsverfahren zur Bestimmung der Position.

Die US 6 549 004 B1 beschäftigt sich mit der Bestimmung von Position und Ausrichtung eines Magnetfeldsensors in einem von einer Mehrzahl von Magnetfeldquellen hervorgerufenen Magnetfeld. Dabei kommt ein CDMA-System zum Einsatz, das den einzelnen Magnetfeldquellen orthogonale Spreizsequenzen zuordnet, anhand derer die einzelnen Quellen unterschieden werden können. Zur Bestimmung der Position und Lage, d. h. der drei translatorischen und der drei rotatorischen Freiheitsgrade eines Magnetfeldsensors in dem Feld, werden Vektorgleichungen herangezogen, die zunächst über eine Näherung eine grobe Bestimmung der Position und Lage erlauben. Über einen iterativen Algorithmus können dann die grobe Position und Lage genauer bestimmt werden.

Die Aufgabe der vorliegenden Erfindung besteht darin, ein Konzept zur Abstandsmessung mittels gesteuerten magnetischen Feldern zu schaffen, das auf magnetischen Gleichfeldern basiert, keinen hohen Kalibrierungsaufwand erfordert, eine genaue Bestimmung des Abstandes erlaubt und aufwandsgünstig implementierbar ist.

Diese Aufgabe wird gelöst durch eine Vorrichtung gemäß Anspruch 1 und ein Verfahren gemäß Anspruch 14, sowie ein Computerprogramm gemäß Anspruch 15.

Die Aufgabe wird gelöst durch eine

Vorrichtung zum Bestimmen eines Messfeldquellenabstands zwischen einer Messfeldquelle und einem Magnetfeldsensor, mit dem Magnetfeldsensor zur Erfassung eines Magnetfeldes ; einer Steuereinrichtung, die einen Anschluss für eine Referenzfeldquelle aufweist, an dem ein erstes Steuersignal zum Ansteuern der Referenzfeldquelle mit einem ersten Steuersignal während einer ersten Messphase ausgebbar ist und einen Anschluss für die Messfeldquelle aufweist, an dem ein zweites Steuersignal zum Ansteuern der Messfeldquelle während einer zweiten Messphase ausgebbar ist; und einer Auswerteeinrichtung, die mit dem Magnetfeldsensor und der Steuereinrichtung gekoppelt ist, mit einem Anschluss, an dem ein Signal mit Information über den Messfeldquellenabstand ausgebbar ist, basierend auf einem Quotienten aus einem während der ersten Messphase erfassten Magnetfeld und einem während der zweiten Messphase erfassten Magnetfeld, einer bekannten Abstandscharakteristik und einer bekannten Steuercharakteristik der erzeugten Magnetfelder der Messfeldquelle und der Referenzfeldquelle, und einem definierten räumlichen Referenzfeldquellenabstand oder einem definierten räumlichen Abstand der Referenzfeldquelle zu der Messfeldquelle.

Die Aufgabe wird ferner gelöst durch ein Verfahren zum Bestimmen eines Messfeldquellenabstands zwischen einem Magnetfeldsensor und einer Messfeldquelle mit folgenden Schritten: Ansteuern einer Referenzfeldquelle mit einem ersten Steuersignal, wobei die Referenzfeldquelle einen definierten räumlichen Referenzfeldquellenabstand zu dem Magnetfeldsensor oder einen definierten räumlichen Abstand zu einer Messfeldquelle aufweist und die Messfeldquelle und die Referenzfeldquelle am Ort des Magnetfeldsensors ein Magnetfeld mit einer bekannten Abstandscharakteristik und einer bekannten Steuercharakteristik erzeugen; Erfassen eines ersten Magnetfeldes, das auf dem von Referenzfeldquelle erzeugten Magnetfeld basiert; Ansteuern der Messfeldquelle mit einem zweiten Steuersignal; Erfassen eines zweiten Magnetfeldes, das auf dem von der Messfeldquelle erzeugten Magnetfeld basiert; und Bestimmen des Messfeldquellenabstands basierend auf einem Quotienten aus der ersten Magnetfeldkomponente und der zweiten Magnetfeldkomponente, der bekannten Abstandscharakteristik und der bekannten Steuercharakteristik der erzeugten Magnetfelder und dem definierten räumlichen Referenzfeldquellenabstand zu dem Magnetfeldsensor oder dem definierten räumlichen Abstand der Referenzfeldquelle zu der Messfeldquelle.

Die Aufgabe wird ferner gelöst durch ein Computerprogramm mit einem Programmcode zur Durchführung des erfindungsgemäßen Verfahrens, wenn das Computerprogramm auf einem Computer abläuft.

Der Kerngedanke der vorliegenden Erfindung besteht darin, dass zur Bestimmung eines Abstandes zwischen einem Magnetfeldsensor und einer Messfeldquelle über die Messfeldquelle ein Magnetfeld erzeugt werden kann, dessen Intensität mit der eines Magnetfeldes, das von einer Referenzfeldquelle erzeugt werden kann, in ein Verhältnis gesetzt wird, so dass ein Maß für den Abstand zwischen der Messfeldquelle und dem Magnetfeldsensor bestimmt und auf komplizierte Kalibrierungsverfahren verzichtet werden kann. Die Anordnung dient zur Messung des Abstands beispielsweise eines Messleiters über einer Messebene, in der der Magnetfeldsensor liegt und somit allgemein zur Messung einer Verschiebung auf einer beispielsweise linearen Bewegungsbahn. Dabei werden magnetische Gleichfelder verwendet. Gemäß der vorliegenden Erfindung werden zwei Magnetfeldquellen zur Magnetfeldgenerierung benutzt, deren resultierende Feldstärke am Ort des Magnetfeldsensors eine unterschiedliche Überlagerung der Anteile aus beiden Quellen zeigt, wobei die eine Quelle an einem bekannten Ort liegt und die zweite am zu ermittelnden Ort. Während der Messphasen werden beide Quellen unterschiedlich angesteuert, sodass die Beiträge beider Quellen im erfassten Magnetfeld voneinander unterschieden werden können.

Ausführungsbeispiele der vorliegenden Erfindung bieten den Vorteil, dass auf eine Kalibrierung verzichtet werden kann. Erfindungsgemäß werden zwei Quellen zur Feldgenerierung benutzt, deren resultierende Feldstärke am Ort des Magnetfeldsensors eine Überlagerung der Magnetfelder aus beiden Quellen zeigt. Eine Quelle befindet sich dabei an einem bekannten Ort und die andere an dem zu ermittelnden Ort. Anhand der Geometrie lässt sich direkt und einfach aus dem resultierenden Ausgangssignal des Magnetfeldsensors die gesuchte Entfernung, bzw. der gesuchte Abstand ermitteln, ohne dass die Empfindlichkeit des Magnetfeldsensors oder der Absolutbetrag der erzeugten Magnetfelder Einfluss auf das Ergebnis haben. Der gesuchte Abstand ergibt sich aus dem Verhältnis von Messwerten und deshalb ist das Verfahren sehr gut als integrierte Schaltung realisierbar.

Bevorzugte Ausführungsbeispiele der vorliegenden Erfindung werden nachfolgend Bezug nehmend auf die beiliegenden Zeichnungen näher erläutert. Es zeigen:

Fig. 1 ein prinzipielles Blockschaltbild eines Ausführungsbeispiels der erfindungsgemäßen Anordnung ;

Fig. 2a ein prinzipielles Blockschaltbild eines Ausführungsbeispiels der erfindungsgemäßen Vorrichtung;

Fig. 2b eine beispielhafte Anordnung einer Messfeldquelle und einer Referenzfeldquelle in Form von rechteckigen Leiterschleifen;

Fig. 3 zeigt ein Ausführungsbeispiel einer Anwendung des erfindungsgemäßen Verfahrens;

Fig. 4 zeigt ein weiteres Ausführungsbeispiel einer Anwendung des erfindungsgemäßen Verfahrens;

Fig. 5 zeigt ein Ausführungsbeispiel der erfindungsgemäßen Vorrichtung; und

Fig. 6 zeigt beispielhafte Signalverläufe einer Abstandsmessung mit einem Ausführungsbeispiel der vorliegenden Erfindung.

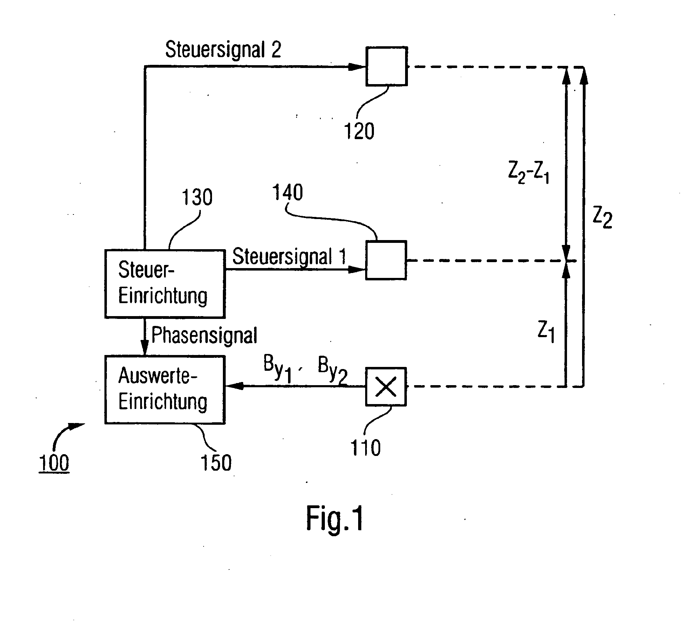

Fig. 1 zeigt eine Anordnung 100 zum Bestimmen eines Messfeldquellenabstands $z_2$ zwischen einem Magnetfeldsensor 110 und einer Messfeldquelle 120. Die Anordnung 100 zum Bestimmen des Messfeldquellenabstands $z_2$ zeigt ferner eine Steuereinrichtung 130, die mit der Messfeldquelle 120, mit einer Referenzfeldquelle 140 und einer Auswerteeinrichtung 150 gekoppelt ist. Die Auswerteeinrichtung 150 ist mit dem Magnetfeldsensor 110 derart gekoppelt, dass die Auswerteeinrichtung 150 die vom Magnetfeldsensor 110 gemessenen Magnetfeldkomponenten $By_1$ und $By_2$ zur Auswertung erhalten kann. Der Magnetfeldsensor 110 erfasst dabei die erste Magnetfeldkomponente $By_1$, die auf einem Magnetfeld basiert, welches durch Ansteuern der Referenzfeldquelle 140 mit einem ersten Steuersignal durch die Steuereinrichtung 130 während einer ersten Messphase erzeugt wird.

Das erste Steuersignal könnte z.B. einem Strom $I_1$ entsprechen, der durch einen die Referenzfeldquelle 140 realisierenden Referenzleiter oder eine Referenzleiterschleife fließt. Die Referenzfeldquelle 140 weist dabei einen definierten räumlichen Referenzfeldquellenabstand $z_1$ zum Magnetfeldsensor 110 oder einen definierten räumlichen Abstand zu der Messfeldquelle 120 $z_2$-$z_1$ auf. Ferner erzeugen die Messfeldquelle 120 und die Referenzfeldquelle 140 am Ort des Magnetfeldsensors 110 ein Magnetfeld mit einer bekannten Abstandscharakteristik und einer bekannten Steuercharakteristik, d.h. es ist bekannt wie das magnetische Feld mit zunehmenden Abstand seine Intensität verändert, beispielsweise reziprok zum Abstand, reziprok zum quadratischen Abstand usw. Ferner ist der Zusammenhang zwischen dem Steuersignal und dem von der Messfeldquelle 120 bzw. der Referenzfeldquelle 140 hervorgerufenen Magnetfeldstärke bekannt, beispielsweise bei einer die Messfeldquelle 120 oder die Referenzfeldquelle realisierenden Spule ergibt sich die magnetische Feldstärke in Abhängigkeit von der Anzahl der Windungen, dem Spulenstrom, dem Spulenkern, dem Abstand usw.

Die Steuereinrichtung 130 steuert ferner in einer zweiten Messphase die Messfeldquelle 120 mit einem zweiten Steuersignal an. Das zweite Steuersignal kann beispielsweise durch einen Strom $I_2$ realisiert sein, der durch einen die Messfeldquelle 140 realisierenden Messleiter oder eine Messleiterschleife fließt. Während dieser zweiten Messphase bestimmt der Magnetfeldsensor 110 die zweite Magnetfeldkomponente $By_2$, die auf einem Magnetfeld basiert, welches durch Ansteuern der Messfeldquelle 120 mit dem zweiten Steuersignal durch die Steuereinrichtung 130 während der zweiten Messphase erzeugt wird.

Die Auswerteeinrichtung 150 erhält in den Messphasen von dem Magnetfeldsensor 110 die erfassten Magnetfeldkomponenten $By_1$ und $By_2$, von der Steuereinrichtung 130 über ein Phasensignal die Information über die jeweiligen Messphasen und bestimmt basierend auf den Magnetfeldkomponenten $By_1$ und $By_2$, der bekannten Abstandscharakteristik und der bekannten Steuercharakteristik der erzeugten Magnetfelder und dem definierten räumlichen Referenzfeldquellenabstand $z_1$ oder dem definierten räumlichen Abstand der Referenzfeldquelle 140 zu der Messfeldquelle 120 $z_2$-$z_1$ den Messfeldquellenabstand $z_2$.

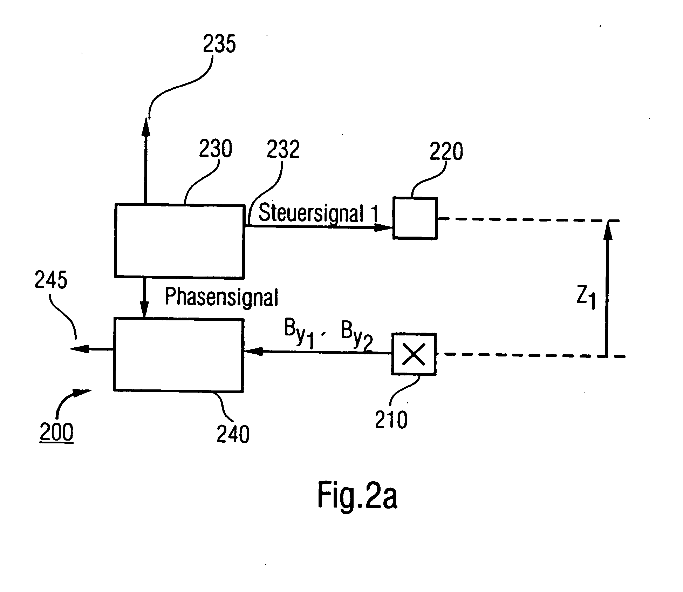

Fig. 2a zeigt eine erfindungsgemäße Vorrichtung 200 zum Bestimmen des Messfeldquellenabstands $z_2$ zwischen einer Messfeldquelle und einem Magnetfeldsensor 210. Ausführungsbeispiele der erfindungsgemäßen Vorrichtung umfassen ferner einen Anschluss 232 für eine Referenzfeldquelle 220, eine Steuerung 230, einen Anschluss 235 für eine Messfeldquelle und eine Auswerteeinheit 240. Die Steuerung 230 weist einen Anschluss 235 auf, über den eine am zu ermittelnden Ort liegende Messfeldquelle über ein erstes Steuersignal angesteuert werden kann, beispielsweise könnte über den Anschluss 235 ein Referenzleiter oder eine Referenzleiterschleife bestromt werden. Die Steuerung 230 weist ferner den Anschluss 232 auf, über den eine Referenzfeldquelle mit einem zweiten Steuersignal angesteuert werden kann, optional kann die Steuerung 230 bereits mit der Referenzfeldquelle 220 gekoppelt sein, bzw. die Referenzfeldquelle 220 in die Vorrichtung 200 mit integriert sein, so dass die Steuerung 230 beispielsweise einen definierten Strom in der Referenzfeldquelle 220, die z.B. durch einen Referenzleiter oder eine Referenzleiterschleife realisiert sein kann, einprägen kann, wobei die Referenzfeldquelle 220 ferner in einem definierten Referenzfeldquellenabstand $z_1$ zum Magnetfeldsensor 210 angeordnet sein kann, bzw. in einem definierten räumlichen Abstand zu der Messfeldquelle $z_2$-$z_1$. Die Referenzfeldquelle 220 und die Messfeldquelle liefern dabei am Ort des Magnetfeldsensors 210 ein Magnetfeld mit einer bekannten Abstandscharakteristik und einer bekannten Steuercharakteristik.

Die Steuerung 230 ist ferner mit der Auswerteinrichtung 240 gekoppelt und übermittelt dieser Information über jeweilige Steuerphasen oder Messphasen mit einem Phasensignal. Der Magnetfeldsensor 210 ist mit der Auswerteeinheit 240 gekoppelt, und die Auswerteeinheit 240 weist einen Anschluss 245 auf, an dem ein Signal mit Informationen über einen Messfeldquellenabstand $z_2$ ausgebbar ist.

Anhand der gegebenen Geometrie, d. h. basierend auf dem definierten Abstand $z_1$ der Referenzfeldquelle 140; 220 zum Magnetfeldsensor 110; 210 bzw. der Referenzfeldquelle 140; 220 und der Messfeldquelle 120 in der Fig. 1, bzw. in der Fig. 2a, lässt sich aus dem resultierenden Ausgangssignal des Magnetfeldsensors 110 bzw. 210 die gesuchte Entfernung $z_2$ bestimmen, ohne dass die Empfindlichkeit des Magnetfeldsensors 110 in Fig. 1 bzw. 210 in Fig. 2a, oder der Absolutbetrag der erzeugten Magnetfeldstärken Einfluss auf das Ergebnis hat, solange die Empfindlichkeit des Magnetfeldsensors 110 über die Messphasen hinweg konstant bleibt. Die Position, d. h. der Messfeldquellenabstand $z_2$, ergibt sich aus dem Verhältnis der Messwerte der Magnetfeldkomponenten $By_1$ und $By_2$, wodurch die erfindungsgemäße Anordnung, die erfindungsgemäße Vorrichtung und das erfindungsgemäße Verfahren sehr gut in einer integrierten Schaltung realisierbar sind. Verläuft die Feldstärke des von der Referenzfeldquelle 140; 220 oder der Messfeldquelle 120 erzeugten Magnetfeldes wenigstens näherungsweise reziprok zum Abstand, so wird die Bestimmung von $z_2$ direkt und einfach möglich.

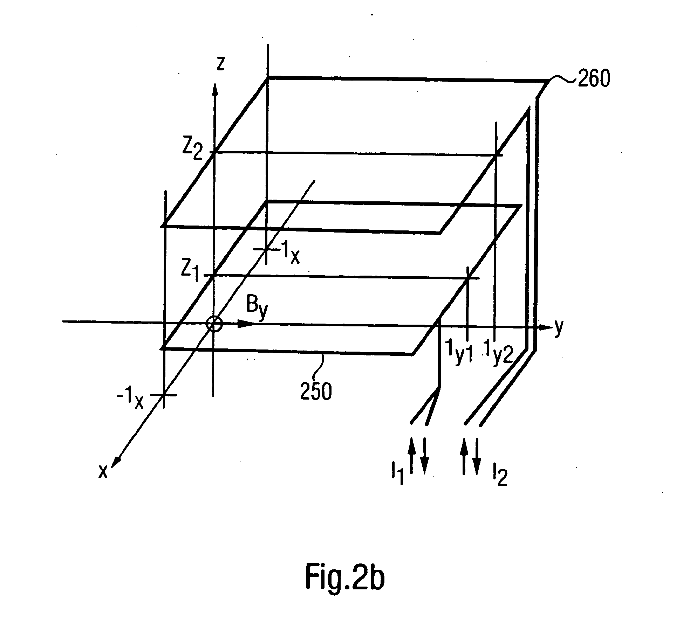

In der Fig. 2b ist eine beispielhafte Anordnung einer Messfeldquelle und einer Referenzfeldquelle in Form von rechteckförmigen Leiterschleifen 250 und 260 dargestellt. Beispielhaft wird die Leiterschleife 250 von einem Strom $I_1$ durchflossen und die Leiterschleife 260 von einem Strom $I_2$. Gemäß dem dargestellten Koordinatensystem, verlaufen beide Leiterschleifen parallel zu der x-y-Ebene, wobei die Leiterschleife 250 hinsichtlich der z-Achse bei $z_1$ angeordnet ist und die Leiterschleife 260 entsprechend bei $z_2$. Wenn die Dimensionen der Leiterschleifen lx, $ly_1$ und $ly_2$ deutlich größer als der Abstand $z_2$ sind, dann wird das durch den Stromfluss $I_1$ bzw. $I_2$ im Ursprung des Koordinatensystems mit einem Magnetfeldsensor messbare Magnetfeld By ungefähr proportional zu $1/z_1$ bzw. $1/z_2$.

Prinzipiell nimmt die von einem Magnetfeldsensor gemessene Komponente eines magnetischen Feldes mit zunehmendem Abstand in definierter Weise ab. Am vorteilhaftesten für eine einfache Auswertung, d.h. eine möglichst wenig komplexe Auswerteeinrichtung, ist eine reziproke Annahme, d.h. eine Abnahme des magnetischen Feldes proportional zu dem Kehrwert des Abstand. Generell sind aber auch andere Abnahmecharakteristika denkbar und erfindungsgemäße Anordnungen, Vorrichtungen und Verfahren realisierbar, wie beispielsweise bei quadratischem oder kubischem Verlauf, wobei dann die Auswerteeinrichtung entsprechend der Charakteristik angepasst werden muss.

Das Feld wird erfindungsgemäß in seiner Intensität umgeschaltet, wobei sich die Abnahmecharakteristik des Feldes nicht ändert. Die Steuersignale oder die eingeprägten Ströme schalten dabei zwischen zwei Skalierungsfaktoren um, wo bei einem bevorzugten Ausführungsbeispiel das erste Steuersignal zwischen 1,0 und 0,0 und das zweite Steuersignal zwischen K1 und 0,0 umschaltet. Generell sind auch beliebige Faktoren denkbar, beispielsweise K1a, K1b, K2a, und K2b, die solange sie bekannt sind, ebenfalls erfindungsgemäß verwendet werden können, d.h. das erste Steuersignal wird dann zwischen K1a und K1b umgeschaltet und das zweite Steuersignal zwischen K2a und K2b. Dies sollte dann entsprechend in der Auswerteeinrichtung berücksichtigt werden.

Gemäß der Fig. 2b kann zur Variation von $z_2$ die gesamte obere Leiterschleife 260 auf und ab bewegt werden. Die Ströme $I_1$ und $I_2$ in der Leiterschleife 250 bzw. 260 erzeugen jeweils am Ort des Magnetfeldsensors ein Feld mit einer Komponente in y-Richtung. Dies ist in Fig. 2b beispielhaft im Ursprung des Koordinatensystems dargestellt. Werden die Ströme abwechselnd eingeschaltet, auch ein überlappender Betrieb ist denkbar, so kann jeweils der Beitrag des von jedem einzelnen Stromes erzeugten Feldes ermittelt werden. Dieser ist jeweils proportional zum Quotient aus Strom durch Abstand, wenn der Leiter auf der nahezu senkrecht über dem Sensor liegenden Bewegungsbahn bewegt wird.

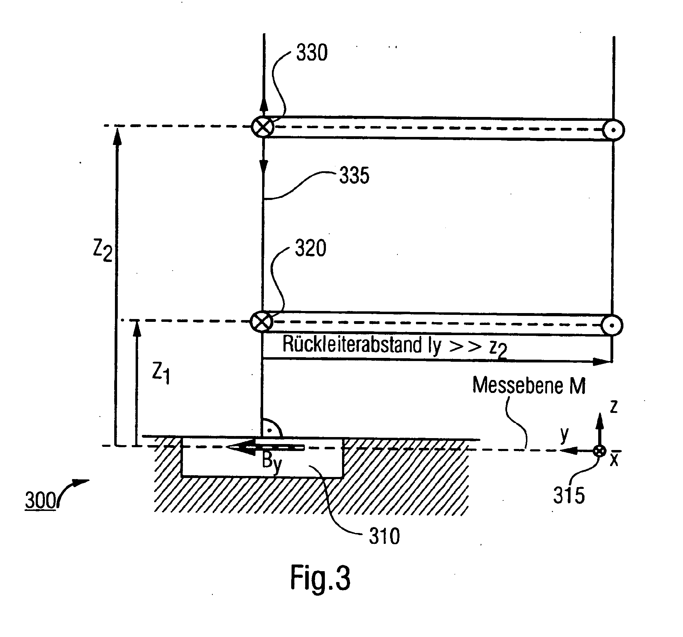

Fig. 3 zeigt ein prinzipielles Ausführungsbeispiel 300 der vorliegenden Erfindung, wobei die Referenzfeldquelle und die Messfeldquelle jeweils durch eine Leiterschleife realisiert sind, die im Folgenden auch Messleiter bzw. Referenzleiter genannt werden. Fig. 3 zeigt einen Magnetfeldsensor 310, der sich in einer Messebene M befindet. Beispielhaft wird in der Fig. 3 davon ausgegangen, dass der Magnetfeldsensor 310 gemäß dem Koordinatensystem 315 Y-Komponenten By des Magnetfeldes B erfasst. Gemäß der Anordnung in Fig. 3 befindet sich senkrecht über dem Magnetfeldsensor 310 in einem Abstand $z_1$ der Referenzleiter 320. Ferner ist über dem Referenzleiter 320 in einem Messleiterabstand $z_2$ der Messleiter 330 angeordnet, dessen Messleiterabstand $z_2$ zu bestimmen ist. Ferner wird im Ausführungsbeispiel in Fig. 3 davon ausgegangen, dass der Messleiter 330 beweglich ist, was durch die beiden Pfeile in Z-Richtung durch den Messleiter 330 in Fig. 3 angedeutet ist. Beispielsweise könnte der Messleiter auf einer Membrane einer Druckmessdose montiert sein, und somit ließe sich über die Position des Messleiters 330 ein Druck bestimmen. In diesem Ausführungsbeispiel würde der Messleiter 330 dann seine Lage in Abhängigkeit eines Druckes ändern. In anderen Ausführungsbeispielen, beispielsweise wenn der Messleiter 330, der Referenzleiter 320 oder auch der Magnetfeldsensor 310 mechanisch an ein bewegtes Teil eines Roboters gekoppelt ist, kann die Abstanderfassung zu einem feststehenden Punkt im Raum zur Kalibrierung einer Referenzposition des Roboters dienen. Im Folgenden wird davon ausgegangen, dass der Messleiter sich während den Messphasen nicht bewegt, d.h. die Bestimmung des Messleiterabstandes in einer Zeitdauer erfolgt, während der Messleiter als stationär betrachtet werden kann.

Aus Gründen der Übersichtlichkeit sind im Ausführungsbeispiel in der Fig. 3 die Steuereinrichtung/Steuerung und die Auswerteeinrichtung/Auswerteeinheit nicht gezeigt. Es wird darauf hingewiesen, dass die Steuereinrichtung/Steuerung jedoch notwendig ist, um die nachfolgend beschriebenen Ströme in den Referenzleiter 320 und den Messleiter 330 einzuprägen, sowie dass die Auswerteeinrichtung/Auswerteeinheit erforderlich ist, um die Signale, die vom Magnetfeldsensor 310 geliefert werden, auszuwerten.

Die Steuereinrichtung/Steuerung prägt zunächst einen ersten Strom $I_1$, d.h. ein erstes Steuersignal, in den Referenzleiter 320 ein, der am Ort des Magnetfeldsensors 310 ein magnetisches Feld mit einer Y-Komponente $By_1$ erzeugt. Ferner prägt die Steuereinrichtung/Steuerung einen zweiten Strom $I_2$, d.h. ein zweites Steuersignal in den Messleiter 330 ein, der am Ort des Magnetfeldsensors 310 ein magnetisches Feld mit einer Y-Komponente $By_2$ erzeugt. Werden die beiden Ströme abwechselnd eingeschaltet, alternativ in einem anderen Ausführungsbeispiel ist auch ein überlappender Betrieb möglich, so kann jeweils der Beitrag des von jedem einzelnen Strom erzeugten Magnetfeldes $By_1$ und $By_2$ ermittelt werden. Der jeweilige Beitrag eines Stromes ist proportional zu dem Quotienten aus dem Strom selbst und dem Abstand des Messleiters bzw. Referenzleiters, sofern der Messleiter bzw. Referenzleiter auf der nahezu senkrecht über dem Magnetfeldsensor liegenden Bewegungsbahn bewegt wird bzw. angeordnet ist.

$$By_1 = By\Big|_{I_2=0} \sim \frac{I_1}{z_1} , \qquad (1)$$

$$By_2 = By\Big|_{I_1=0} \sim \frac{I_2}{z_2} . \qquad (2)$$

Wird dann für den zweiten Strom $I_2$ ein $K_1$-faches des ersten Stroms $I_1$ eingesetzt, d. h. die Steuereinrichtung/Steuerung prägt die beiden Ströme $I_1$ und $I_2$ gemäß einem bekannten Stromverhältnis $K_1$ ein, so ist das Verhältnis der beiden Magnetfeldkomponenten $By_1$ und $By_2$ direkt proportional zur gesuchten Höhe $z_2$, sofern das Stromverhältnis $K_1$ bekannt ist, und ist dazu noch unabhängig von den Absolutwerten der jeweiligen Ströme $I_1$ und $I_2$:

$$\frac{By_1}{By_2} = \frac{z_2 \cdot I_1}{z_1 \cdot I_1 \cdot K_1} = \frac{z_2}{z_1 \cdot K_1} , \qquad (3)$$

bzw.

$$z_2 = z_1 \cdot K_1 \cdot \frac{By_1}{By_2} , \qquad (4)$$

wobei $z_1$ und $K_1$ für den Messaufbau feste Größen darstellen.

Zweckmäßigerweise wird dabei das Stromverhältnis $K_1$ so gewählt, dass die beiden Magnetfeldkomponenten $By_1$ und $By_2$ annähernd die gleiche Größenordnung besitzen, um günstige Voraussetzung für eine genaue Ermittlung des Messleiterabstands $z_2$ durch die Auswerteeinrichtung/Auswerteeinheit zu schaffen, die in Ausführungsbeispielen der vorliegenden Erfindung beispielsweise durch einen Mikrocontroller, einen Prozessor oder eine Auswertungselektronik realisiert sein kann. Die Lage des Messleiters 330 muss dabei nicht genau senkrecht über dem Magnetfeldsensor 310 sein, wie es in der Fig. 3 dargestellt ist, denn der Verlauf der Y-Magnetfeldkomponente am Ort des Magnetfeldsensors 310 folgt einem sinusförmigen Verlauf in dessen Maximum und ist damit wenig sensitiv gegenüber kleinen Winkeländerungen. Ferner wird vereinfachend in der Fig. 3 davon ausgegangen, dass sich der Rückleiter der Messleiterschleife in einem Abstand ly>>$z_2$ befindet, so dass dessen Feld vernachlässigt werden kann. In einem anderen Ausführungsbeispiel kann der Einfluss dieses Feldes in der Auswerteeinrichtung kompensiert werden.

In einem weiteren Ausführungsbeispiel ist nicht der Referenzfeldquellenabstand $z_1$ bekannt, sondern der Abstand zwischen der Referenzfeldquelle und der Messfeldquelle $z_2$-$z_1$. Wird statt $z_1$, $z_2$-$z_1$ konstant gehalten, also gemäß der Fig. 3 der untere Referenzleiter 320 in festem Abstand zum oberen Messleiter 330 mitbewegt, so kann ebenfalls die Höhe $z_2$ aus dem Verhältnis der gemessenen Felder und der Ströme bestimmt werden, nur die Berechnung wird etwas aufwendiger. Es ergibt sich dann aus dem Verhältnis der Magnetfelder und Ströme

$$\frac{By_1}{By_2} = \frac{z_2 \cdot I_1}{z_1 \cdot I_1 \cdot K_1} = \frac{z_2}{(z_2 - (z_2 - z_1)) \cdot K_1} \qquad (5)$$

und entsprechend

$$z_2 = \frac{(z_2 - z_1)}{1 - \dfrac{By_2}{K_1 \cdot By_1}} \qquad (6)$$

Bei gleichbleibender Ansteuerung muss nun die Auswertung bzw. die Auswerteeinrichtung entsprechend angepasst werden.

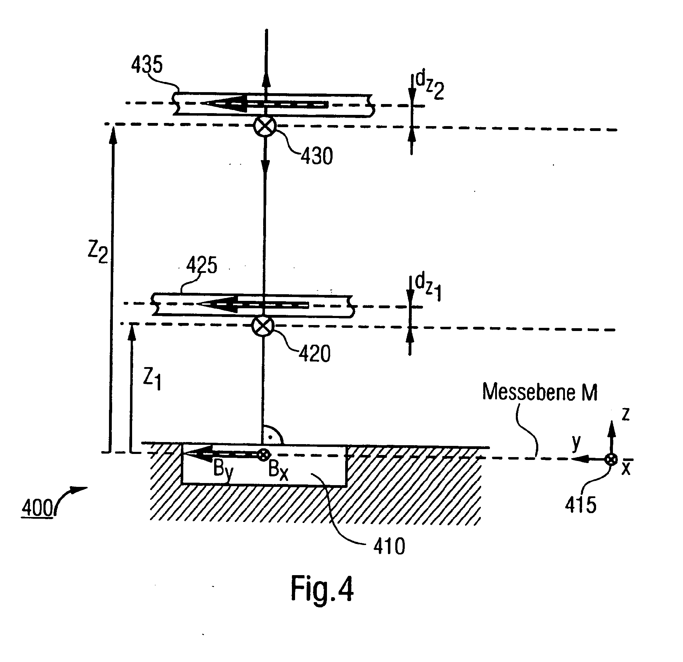

Ein weiteres Ausführungsbeispiel der vorliegenden Erfindung ist in Fig. 4 dargestellt. Fig. 4 zeigt eine Anordnung 400 zur Bestimmung eines Messfeldquellenabstandes $z_2$ mit einem Magnetfeldsensor 410, der in dem vorliegenden Ausführungsbeispiel als zweidimensionaler Magnetfeldsensor 410 ausgeführt ist. Gemäß dem in Fig. 4 vorausgesetzten Koordinatensystem 415, erfasst der zweidimensionale Magnetfeldsensor 410 eine Y-Komponente By und eine X-Komponente Bx des Magnetfeldes in der Messebene M. Senkrecht über dem Magnetfeldsensor 410 ist im Abstand $z_1$ ein erster Referenzleiter 420, der wie bereits oben beschrieben ein Teil einer Referenzleiterschleife sein kann, angeordnet, der einen ersten Strom $I_{1x}$ in X-Richtung der Anordnung 400 leitet. In einem Abstand $dz_1$ über dem ersten Referenzleiter 420 befindet sich ein zweiter Referenzleiter 425, der ebenfalls ein Teil einer zweiten Referenzleiterschleife sein kann und der einen ersten Strom $I_{1y}$ in Y-Richtung der Anordnung 400 leitet.

Senkrecht über den beiden Referenzleitern 420 und 425 befindet sich am zu bestimmenden Ort im Messleiterabstand $z_2$ zu dem zweidimensionalen Magnetfeldsensor 410 der Messleiter 430, der ein Teil einer Messleiterschleife kann, der einen zweiten Strom $I_{2x}$ in X-Richtung der Anordnung 400 leistet. Unmittelbar darüber in einem Abstand von $dz_2$ befindet sich ein zweiter Messleiter 435, der ebenfalls Teil einer zweiten Messleiterschleife sein kann und der einen zweiten Strom $I_{2y}$ in Y-Richtung der Anordnung 400 leitet. Wie die Anordnung 400 in Fig. 4 zeigt, befinden sich hier eine zusätzliche Referenzfeldquelle in Form eines Referenzleiters 425 und eine zusätzliche Messfeldquelle in Form eines Messleiters 435, die im Vergleich zu denen der Anordnung 300 in Fig. 3 um 90° gedreht vorliegen. Mit Hilfe der Anordnung 400 kann die Störsicherheit der Messung gegenüber externen Feldern deutlich erhöht werden. Die Höhenkorrektur, die in Fig. 4 durch die beiden Abstände $dz_1$ und $dz_2$ dargestellt sind, sollten bei der Auswertung der Messfeldkomponenten berücksichtigt werden, da die Referenzleiter 420 und 425 sowie die Messleiter 430 und 435 für jeweils beide Richtungen nicht genau an der gleichen Stelle liegen können.

Wie anhand der Fig. 4 angedeutet, lässt sich prinzipiell das Verfahren der Vergleichsmessung auch für mehrere Raumrichtungen überlagern, wodurch die Berechnung des Abstandes $z_2$ zwar genauer, aber auch komplexer wird. Generell ist auch hier ein weiteres Ausführungsbeispiel bei dem der Abstand zwischen der Messfeldquelle und der Referenzfeldquelle konstant gehalten wird realisierbar, wobei dann die Auswerteeinrichtung entsprechend angepasst wird. In einem weiteren Ausführungsbeispiel der vorliegenden Erfindung wäre es auch denkbar, die zusätzliche Referenzfeldquelle und die zusätzliche Messfeldquelle für eine zusätzliche Abstandsmessung in einer anderen Raumrichtung zu verwenden.

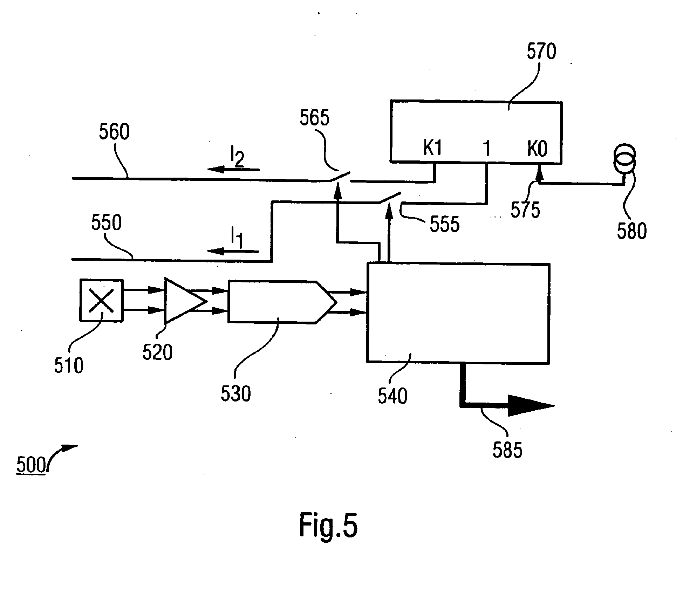

Fig. 5 zeigt eine Realisierung 500 der vorliegenden Erfindung. Fig. 5 zeigt einen Magnetfeldsensor 510, dem ausgangsseitig ein Vorverstärker 520 nachgeschaltet ist. Der Ausgang des Vorverstärkers 520 ist mit dem Eingang eines Analog-Digital-Umsetzers 530 verbunden, der die digital umgesetzten Signale einer digitalen Steuerung 540 zur Verfügung stellt. Die digitale Steuerung 540 kann beispielsweise durch einen Prozessor oder einen Mikrocontroller realisiert sein. Die digitale Steuerung 540 realisiert in dem vorliegenden Ausführungsbeispiel die erfindungsgemäße Auswerteeinrichtung/Auswerteeinheit. Die Realisierung 500 des Ausführungsbeispiels in Fig. 5 weist ferner einen Referenzleiter 550 und einen Messleiter 560 auf, die die Referenzfeldquelle und die Messfeldquelle realisieren.

Der Referenzleiter 550 ist über einen Schalter 555 mit einem Stromspiegel 570 gekoppelt. Der Messleiter 560 ist über einen Schalter 565 ebenfalls mit dem Stromspiegel 570 gekoppelt. Die beiden Schalter 555 und 565 werden von der digitalen Steuerung 540 gesteuert. Der Stromspiegel 570 verfügt über einen Stromeingang 575, der mit einer Referenzstromquelle 580 gekoppelt ist. Die digitale Steuerung 540 kann nun durch Steuern der Schalter 555 und 565 wahlweise den Referenzleiter 550 und den Messleiter 560 bestromen. Der Stromspiegel 570 stellt dabei basierend auf dem Strom der Referenzstromquelle 580 ein festes Verhältnis $K_1$ zwischen dem ersten Strom $I_1$ im Referenzleiter 550 und dem zweiten Strom $I_2$ im Messleiter 560 zur Verfügung,

$$I_2 = K_1 \cdot I_1 . \qquad\qquad (7)$$

Die digitale Steuerung 540 kann nun durch unterschiedliches Ansteuern der Schalter 555 und 565 unterschiedliche Messphasen erzeugen, über den Magnetfeldsensor 510, den Vorverstärker 520 und den Analog-Digital-Umsetzer 530 Messfeldkomponenten, der durch die Ströme $I_1$ und $I_2$ erzeugten Magnetfelder erfassen, und basierend auf dem bekannten Abstand $z_1$ des Referenzleiters 550 auswerten. Die digitale Steuerung 540 verfügt über einen Ausgang 585, an dem ein digitaler Abstandswert ausgegeben werden kann.

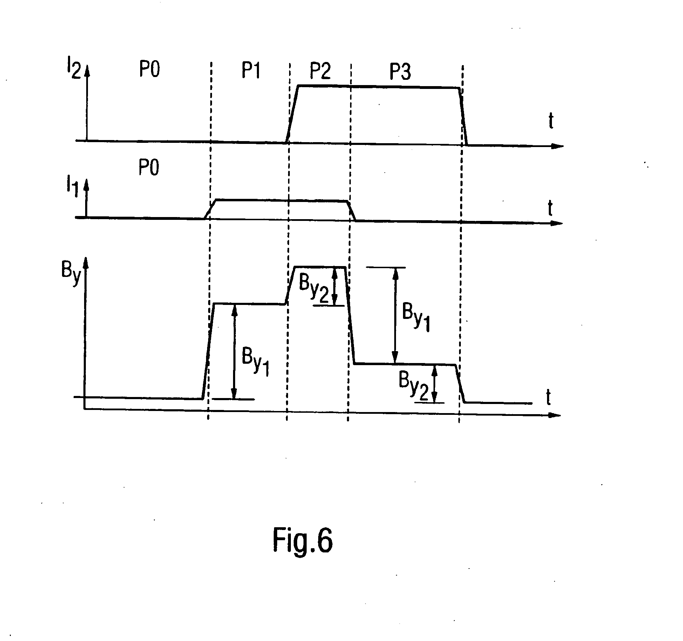

In Fig. 5 bildet die digitale Steuerung 540 das Herz der Schaltung, das alle Abläufe steuert. Das Ausgangssignal des Analog-Digital-Umsetzers 530 wird von der digitalen Steuerung 540 entgegengenommen und das berechnete Ergebnis für den Abstandswert am Ausgang 585 ausgegeben. Beide Ströme $I_1$ und $I_2$ werden über den Stromspiegel 570 aus einer gemeinsamen Referenzfeldquelle 580 erzeugt, wodurch sichergestellt wird, dass sie in einem festen Verhältnis $I_1 : I_2 = 1 : K_1$ stehen. Die Ströme $I_1$ und $I_2$ werden mit Hilfe der Schalter 555 und 565 von der digitalen Steuerung 540, gemäß dem in der Fig. 6 dargestellten Verlauf geschaltet.

Fig. 6 zeigt den zeitlichen Verlauf der Ströme $I_1$ und $I_2$, sowie der vom Magnetfeldsensor 510 erfassten Magnetfeldkomponenten By. Die Zeitachse ist dabei nach rechts aufgetragen, und in vier Messphasen P0 bis P3 eingeteilt. Die Stromverläufe der Ströme $I_1$ und $I_2$ sind in den oberen beiden Diagrammen dargestellt, das gemessene Magnetfeld in Y-Richtung erzeugt eine elektrische Spannung, die wiederum im Vorverstärker 520 verstärkt wird und dann mittels des Analog-Digital-Umsetzers 530 digitalisiert wird. Der Verlauf des Digitalwertes, der die magnetische Feldstärke By darstellt, ist im unteren Diagramm in Fig. 6 dargestellt. Die Skalierung der Y-Achsen ist dabei als beliebig angenommen, ebenso wie der Nullwert der Magnetfeldkomponente By. Nur das Verhältnis der Höhe der Sprünge von $I_1$ und $I_2$ muss $K_1$ betragen.

Während der Messphase P0 schaltet die digitale Steuerung 540 keinen der beiden Schalter 555 und 565 ein, d. h. es fließt kein Strom $I_1$ bzw. $I_2$. In Fig. 6 ist dies in den oberen beiden Verläufen der Ströme $I_1$ und $I_2$ während der Messphase P0 zu erkennen. Während der Messphase P0 bestimmt die digitale Steuerung 540 über den Magnetfeldsensor 510 eine Magnetfeldkomponente By, die dem Nullwert der Magnetfeldkomponente entspricht und beispielsweise auf das Erdmagnetfeld oder den Einfluss anderer Störfelder zurückzuführen ist. Der absolute Wert des Nullwertes der Magnetfeldkomponente ist für das hier vorgestellte Verfahren unrelevant. Es sei darauf hingewiesen, dass durch die Bestimmung des Nullwertes während der Messphase P0 eine Kompensation der nachfolgenden Messwertes um diesen Wert erfolgen kann, so dass diese dann störungsbereinigt vorliegen.

Während der Messphase P1 wird nun der erste Strom $I_1$ eingeschaltet, d. h. die digitale Steuerung 540 schließt den Schalter 555, so dass der erste Strom $I_1$ durch den Referenzleiter 550 fließt. Der durch den Referenzleiter 550 fließende erste Strom $I_1$ verursacht ein Magnetfeld, dessen Komponente $By_1$ über den Magnetfeldsensor 510 erfasst wird. Sowohl der erste Strom $I_1$ als auch die während der Messphase P1 gemessenen Magnetfeldkomponente $By_1$ sind in Fig. 6 dargestellt.

Während der Messphase P2 wird nun zusätzlich der zweite Strom $I_2$ über den Schalter 565 in dem Messleiter 560 eingeschaltet. Durch das durch den zweiten Strom $I_2$ im Messleiter 560 hervorgerufene Magnetfeld erhöht sich die von dem Magnetfeldsensor 510 erfasste Magnetfeldkomponente um den Wert $By_2$, was ebenfalls in Fig. 6 während der Messphase P2 dargestellt ist.

Während der Messphase P3 wird dann der erste Strom $I_1$ im Referenzleiter 550 wieder abgeschaltet, so dass lediglich eine Magnetfeldkomponente $By_2$ erfassbar ist. Durch die Messung der Sprunghöhe von By beim An- und Ausschalten der Ströme werden für $By_1$ und $By_2$ jeweils zwei Messwerte erfasst, die in geeigneter Weise kombiniert werden können, um gültige Werte für $By_1$ und $By_2$ zu ermitteln. Dies kann beispielsweise durch eine einfache Auswahl oder auch durch eine Mittelwertbildung bzw. Gewichtung der einzelnen Messwerte der Messphasen geschehen. Dadurch erfolgt eine Kompensation des Erdmagnetfeldes oder eventueller Stör-Magnetfelder. Anschließend kann das gesamte Messverfahren wiederholt werden, so dass während der Messphase nach der Messphase P3 beide Ströme $I_1$ und $I_2$ wieder abgeschaltet sind, d.h. der Messzyklus wieder mit Messphase P0 beginnt.

An dieser Stelle sei angemerkt, dass es genauso gut möglich ist, die beiden Ströme $I_1$ und $I_2$ nacheinander, d. h. ohne Überlappung, anzuschalten. Dann ist der benötigte Dynamikbereich für By entsprechend geringer.

In einem alternativen Ausführungsbeispiel könnte z. B. mit Hilfe eines schaltbaren Stromspiegels der Faktor $K_1$ so lange angepasst werden, bis die beiden messbaren Magnetfeldkomponenten $By_1$ und $By_2$ gleich groß sind. In diesem Fall wird zur Berechnung des Messleiterabstands $Z_2$ nur noch eine Multiplikation benötigt, denn dann ist

$$z_2 = z_1 \cdot K_1 \cdot 1. \qquad (8)$$

Bei Umkehrung der Stromrichtung von beispielsweise $I_2$ in einem weiteren Ausführungsbeispiel der vorliegenden Erfindung müsste hingegen der Faktor $K_1$ so eingestellt werden, dass sich die Felder beider angeschalteter Messleiter während der Messphase P2 genügend genau kompensieren und der Digitalwert für By damit dem Nullwert ohne Stromfluss entspräche. Der Messleiterabstand $z_2$ kann weiterhin mit der Gleichung 6 berechnet werden. Dieses Verfahren könnte je nach Anwendungsfall Vorteile bei der Messgeschwindigkeit bieten.

Ausführungsbeispiele der vorliegenden Erfindung bieten also den Vorteil, dass keine aufwändige Kalibrierung der Magnetfeldsensoren notwendig ist. Aufgrund der gegebenen Geometrie lässt sich direkt und einfach aus dem resultierenden Ausgangssignal des Magnetfeldsensors die gesuchte Entfernung, d. h. der gesuchte Messleiterabstand $z_2$ berechnen, ohne dass die Empfindlichkeit des Magnetfeldsensors oder die Absolutbeträge der benutzten Ströme $I_1$ und $I_2$ Einfluss auf das Ergebnis haben. Die Position ergibt sich aus dem Verhältnis der Messwerte des Magnetfeldsensors und ist deshalb sehr gut als integrierte Schaltung realisierbar.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Die Erfindung umfasst somit auch ein Computerprogramm mit auf einem maschinenlesbaren Träger gespeicherten Programmcode zur Durchführung des erfindungsgemäßen Verfahrens, wenn das Computerprogramm auf einem Rechner abläuft. Die Erfindung betrifft somit auch ein Computerprogramm mit einem Programmcode zur Durchführung des erfindungsgemäßen Verfahrens, wenn das Computerprogramm auf einem Computer abläuft.

**Patentansprüche**

1. Vorrichtung (100; 200) zum Bestimmen eines Messfeldquellenabstands ($z_2$) zwischen einer Messfeldquelle (120) und einem Magnetfeldsensor (110; 210), mit
   dem Magnetfeldsensor (110; 210) zur Erfassung eines Magnetfeldes (By);
   einer Steuereinrichtung (130; 230), die einen Anschluss (232) für eine Referenzfeldquelle (140; 220) aufweist, an dem ein erstes Steuersignal zum Ansteuern der Referenzfeldquelle (140; 220) mit einem ersten Steuersignal während einer ersten Messphase ausgebbar ist und einen Anschluss (235) für die Messfeldquelle (120) aufweist, an dem ein zweites Steuersignal zum Ansteuern der Messfeldquelle (120) während einer zweiten Messphase ausgebbar ist; und
   einer Auswerteeinrichtung (150; 240), die mit dem Magnetfeldsensor (110; 210) und der Steuereinrichtung (130; 230) gekoppelt ist, mit einem Anschluss (245), an dem ein Signal mit Information über den Messfeldquellenabstand ($z_2$) ausgebbar ist, basierend auf einem Quotienten aus einem während der ersten Messphase erfassten Magnetfeld ($By_1$) und einem während der zweiten Messphase erfassten Magnetfeld ($By_2$), einer bekannten Abstandscharakteristik und einer bekannten Steuercharakteristik der erzeugten Magnetfelder der Messfeldquelle (120) und der Referenzfeldquelle (140; 220), und einem definierten räumlichen Referenzfeldquellenabstand ($z_1$) oder einem definierten räumlichen Abstand ($z_2$-$z_1$) der Referenzfeldquelle (140; 220) zu der Messfeldquelle (120).

**2.** Vorrichtung (100; 200) gemäß Anspruch 1, die ferner die Messfeldquelle (120) und die Referenzfeldquelle (130; 250) aufweist, wobei die Referenzfeldquelle (130; 250) den definierten räumlichen Referenzfeldquellenabstand ($z_1$) zu dem Magnetfeldsensor (110; 210) oder eiden definierten Abstand zu der Messfeldquelle (120) ($z_2$-$z_1$), wobei die Messfeldquelle (120) und die Referenzfeldquelle (140; 220) am Ort des Magnetfeldsensors (110; 210) das Magnetfeld mit der bekannten Abstandscharakteristik und der bekannten Steuercharakteristik erzeugen.

**3.** Vorrichtung (100; 200) gemäß einem der Ansprüche 1 oder 2, bei der die Messfeldquelle (120) einen Messleiter aufweist und die Referenzfeldquelle (140; 220) einen Referenzleiter aufweist, welche in die gleiche Richtung verlaufen und bei der der Magnetfeldsensor (110; 210) angepasst ist, um eine Magnetfeldkomponente in einer Richtung senkrecht zum Verlauf des Messleiters (120) und des Referenzleiters (140; 220) zu erfassen, und die Steuereinrichtung (130; 230) ausgebildet ist um einen ersten Strom als erstes Steuersignal in den Referenzleiter (140; 220) einzuprägen und einen zweiten Strom als zweites Steuersignal in den Messleiter (120) einzuprägen.

**4.** Vorrichtung (100; 200) gemäß einem der Ansprüche 1 bis 3, bei der die Steuereinrichtung (130; 230) ausgebildet ist um der Referenzfeldquelle (140; 220) das erste Steuersignal und der Messfeldquelle (120) das zweite Steuersignal derart vorzugeben, dass die erzeugten Magnetfeldstärken in einer bekannten Beziehung zueinander stehen.

**5.** Vorrichtung (100; 200) gemäß einem der Ansprüche 1 bis 4, bei der die Steuereinrichtung (130; 230) und die Auswerteeinrichtung (150; 240) miteinander gekoppelt sind, und die Steuereinrichtung (130; 230) angepasst ist, um während der zweiten Messphase die Messfeldquelle (120) derart anzusteuern, dass das während der zweiten Messphase erfasste Magnetfeld ($By_2$) dem während der ersten Messphase erfassten Magnetfeld ($By_1$) innerhalb eines Toleranzbereiches gleicht, und die Auswerteeinrichtung (150; 240) angepasst ist, um den Messfeldquellenabstand ($z_2$) basierend auf dem Verhältnis der erzeugten Magnetfeldstärken zu bestimmen.

**6.** Vorrichtung (100; 200) gemäß einem der Ansprüche 1 bis 5, bei der die Steuereinrichtung (130; 230) angepasst ist, um die Referenzfeldquelle (140; 220) und gleichzeitig die Messfeldquelle (120) derart anzusteuern, dass die resultierenden Magnetfelder entgegengesetzte Polarisierungen aufweisen und sich gegenseitig in einem Toleranzbereich aufheben und die Auswerteeinrichtung (150; 240) angepasst ist, um den Messfeldquellenabstand ($z_2$) basierend auf dem Verhältnis der erzeugten Magnetfeldstärken zu bestimmen.

**7.** Vorrichtung (100; 200) gemäß einem der Ansprüche 1 bis 6, bei der die Steuereinrichtung (130; 230) angepasst ist, um in einer zusätzlichen Messphase gleichzeitig die Referenzfeldquelle (140; 220) und die Messfeldquelle (120) anzusteuern und die Auswerteeinrichtung (150; 240) angepasst ist, um bei der Bestimmung des Messfeldquellenabstandes ($z_2$) eine in der zusätzlichen Messphase erfasste Magnetfeldstärke zu berücksichtigen.

**8.** Vorrichtung (100; 200) gemäß einem der Ansprüche 1 bis 7, bei der die Steuereinrichtung (130; 230) angepasst ist, um in einer weiteren Messphase weder die Referenzfeldquelle (140; 220) noch die Messfeldquelle (120) anzusteuern und die Auswerteeinrichtung (150; 240) angepasst ist, um bei der Bestimmung des Messfeldquellenabstandes ($z_2$) eine in der weiteren Messphase erfasste Magnetfeldstärke zu berücksichtigen.

**9.** Vorrichtung (100; 200) gemäß einem der Ansprüche 1 bis 8, die ferner eine Einrichtung zur beweglichen Lagerung des Messleiters (120) aufweist.

**10.** Vorrichtung (100; 200) gemäß einem der Ansprüche 1 bis 9, bei der die Steuereinrichtung (130; 230) und die Auswerteeinrichtung (150; 240) ausgebildet sind, um Einflüsse des Erdmagnetfeldes oder von Stör-Magnetfeldern zu reduzieren.

**11.** Vorrichtung (100; 200) gemäß einem der Ansprüche 1 bis 10, die eine zweite Messfeldquelle und eine zweite Referenzfeldquelle aufweist, die im Vergleich zu der Messfeldquelle (120) und der Referenzfeldquelle (140; 220) eine andere Orientierung aufweisen, wobei der Magnetfeldsensor (110; 210) ausgebildet ist, um weitere Magnetfeldkomponenten basierend auf erzeugten Magnetfeldstärken der zweiten Messfeldquelle und der zweiten Referenzfeldquelle zu erfassen; die Steuereinrichtung (130; 230) ausgebildet ist, um Steuersignale für die zweite Messfeldquelle und die zweite Referenzfeldquelle zu erzeugen; und die Auswerteeinrichtung (150; 240) ausgebildet ist, um die weiteren erfassten Magnetfeldkomponenten bei der Bestimmung des Messfeldquellenstandes ($z_2$) zu berücksichtigen.

**12.** Vorrichtung (100; 200) gemäß einem der Ansprüche 1 bis 11, bei der die Messfeldquelle (120) oder die zweite Messfeldquelle einen auf einer Membrane verlaufenden Messleiterabschnitt umfasst.

**13.** Vorrichtung (100; 200) gemäß einem der Ansprüche 1 bis 12, bei der die Messfeldquelle (120) oder die zweite Messfeldquelle einen Messleiterabschnitt umfasst, der mechanisch an ein mikromechanisches Element gekoppelt ist.

**14.** Verfahren zum Bestimmen eines Messfeldquellenabstands ($z_2$) zwischen einem Magnetfeldsensor (110; 210) und einer Messfeldquelle (120) mit folgenden Schritten:

Ansteuern einer Referenzfeldquelle (140; 220) mit einem ersten Steuersignal, wobei die Referenzfeldquelle (140; 220) einen definierten räumlichen Referenzfeldquellenabstand ($z_1$) zu dem Magnetfeldsensor (110; 210) oder einen definierten räumlichen Abstand zu einer Messfeldquelle (120) ($z_2$-$z_1$) aufweist und die Messfeldquelle (120) und die Referenzfeldquelle (140; 220) am Ort des Magnetfeldsensors (110; 210) ein Magnetfeld mit einer bekannten Abstandscharakteristik und einer bekannten Steuercharakteristik erzeugen;
Erfassen eines ersten Magnetfeldes ($By_1$), das auf dem von Referenzfeldquelle (140; 220) erzeugten Magnetfeld basiert;
Ansteuern der Messfeldquelle (120) mit einem zweiten Steuersignal;
Erfassen eines zweiten Magnetfeldes ($By_2$), das auf dem von der Messfeldquelle (120) erzeugten Magnetfeld basiert; und
Bestimmen des Messfeldquellenabstands ($z_2$) basierend auf einem Quotienten aus der ersten Magnetfeldkomponente ($By_1$) und der zweiten Magnetfeldkomponente (By2), der bekannten Abstandscharakteristik und der bekannten Steuercharakteristik der erzeugten Magnetfelder und dem definierten räumlichen Referenzfeldquellenabstand ($z_1$) zu dem Magnetfeldsensor (110; 210) oder dem definierten räumlichen Abstand der Referenzfeldquelle (140; 220) zu der Messfeldquelle (120) ($z_2$-$z_1$).

**15.** Computerprogramm mit einem Programmcode zur Durchführung des Verfahrens gemäß Anspruch 14, wenn das Computerprogramm auf einem Computer abläuft.

**Claims**

**1.** Device (100; 200) for determining a measuring field source distance ($z_2$) between a measuring field source (120) and a magnetic field sensor (110; 210), comprising
the magnetic field sensor (110; 210) for sensing a magnetic field (By);
a control means (130; 230) comprising a terminal (232) for a reference field source (140; 220) at which a first control signal for controlling the reference field source (140; 220) using a first control signal may be output during a first measuring phase, and comprising a terminal (235) for the measuring field source (120) at which a second control signal for controlling the measuring field source (120) may be output during a second measuring phase; and
an evaluation means (150; 240) coupled to the magnetic field sensor (110; 210) and to the control means (130; 230), comprising a terminal (245) at which a signal having information about the measuring field source distance ($z_2$) may be output, on the basis of a quotient of a magnetic field ($By_1$) sensed during the first measuring phase and a magnetic field ($By_2$) sensed during the second measuring phase, a known distance characteristic and a known control characteristic of the created magnetic fields of the measuring field source (120) and of the reference field source (140; 220), and a defined spatial reference field source distance ($z_1$) or a defined spatial distance ($z_2$-$z_1$) of the reference field source (140; 220) from the measuring field source (120).

**2.** Device (100; 200) as claimed in claim 1, further comprising the measuring field source (120) and the reference field source (130; 250), the reference field source (130; 250) having the defined spatial reference field source distance ($z_1$) from the magnetic field sensor (110; 210) or a defined distance from the measuring field source (120) ($z_2$-$z_1$), the measuring field source (120) and the reference field source (140; 220) creating, at the location of the magnetic field sensor (110; 210), the magnetic field having the known distance characteristic and the known control characteristic.

**3.** Device (100; 200) as claimed in one of claims 1 or 2, wherein the measuring field source (120) comprises a measuring conductor, and the reference field source (140; 220) comprises a reference conductor, which extend in the same direction, and wherein the magnetic field sensor (110; 210) is adapted to sense a magnetic field component in a direction perpendicular to the courses of the measuring conductor (120) and of the reference conductor (140; 220), and the control means (130; 230) is configured to impress a first current into the reference conductor (140; 220) as the first control signal, and to impress a second current into the measuring conductor (120) as the second control signal.

**4.** Device (100; 200) as claimed in any of claims 1 to 3, wherein the control means (130; 230) is configured to dictate the first control signal to the reference field source (140; 220) and the second control signal to the measuring field source (120) such that the magnetic field strengths produced are in a known relationship with each other.

**5.** Device (100; 200) as claimed in any of claims 1 to 4, wherein the control means (130; 230) and the evaluation means (150; 240) are coupled to each other, and the control means (130; 230) is adapted to control, during the second measuring phase, the measuring field source (120) such that the magnetic field $(By_2)$ sensed during the second measuring phase is equal, within a tolerance range, to the magnetic field $(By_1)$ sensed during the first measuring phase, and the evaluation means (150; 240) is adapted to determine the measuring field source distance $(z_2)$ on the basis of the relation of the magnetic field strengths produced.

**6.** Device (100; 200) as claimed in any of claims 1 to 5, wherein the control means (130; 230) is adapted to control the reference field source (140; 220) and, at the same time, the measuring field source (120) such that the resulting magnetic fields have opposite polarizations and cancel each other out within a tolerance range, and the evaluation means (150; 240) is adapted to determine the measuring field source distance $(z_2)$ on the basis of the relation of the magnetic field strengths produced.

**7.** Device (100; 200) as claimed in any of claims 1 to 6, wherein the control means (130; 230) is adapted to control, in an additional measuring phase, the reference field source (140; 220) and the measuring field source (120) at the same time, and the evaluation means (150; 240) is adapted to take into account a magnetic field strength sensed in the additional measuring phase when determining the measuring field source distance $(z_2)$.

**8.** Device (100; 200) as claimed in any of claims 1 to 7, wherein the control means (130; 230) is adapted to control, in a further measuring phase, neither the reference field source (140; 220) nor the measuring field source (120), and the evaluation means (150; 240) is adapted to take into account a magnetic field strength sensed in the further measuring phase when determining the measuring field source distance $(z_2)$.

**9.** Device (100; 200) as claimed in any of claims 1 to 8, further comprising a means for movably mounting the measuring conductor (120).

**10.** Device (100; 200) as claimed in any of claims 1 to 9, wherein the control means (130; 230) and the evaluation means (150; 240) are configured to reduce influences of the earth's magnetic field or of perturbing magnetic fields.

**11.** Device (100; 200) as claimed in any of claims 1 to 10, comprising a second measuring field source and a second reference field source which have different orientations as compared to the measuring field source (120) and the reference field source (140; 220), the magnetic field sensor (110; 210) being configured to sense further magnetic field components on the basis of the produced magnetic field strengths of the second measuring field source and of the second reference field source; the control means (130; 230) being configured to produce control signals for the second measuring field source and the second reference field source; and the evaluation means (150; 240) being configured to take into account the further sensed magnetic field components when determining the measuring field source distance $(z_2)$.

**12.** Device (100; 200) as claimed in any of claims 1 to 11, wherein the measuring field source (120) or the second measuring field source includes a measuring conductor portion extending on a membrane.

**13.** Device (100; 200) as claimed in any of claims 1 to 12, wherein the measuring field source (120) or the second measuring field source includes a measuring conductor portion mechanically coupled to a micromechanical element.

**14.** Method of determining a measuring field source distance $(z_2)$ between a magnetic field sensor (110; 210) and a measuring field source (120), comprising:

controlling a reference field source (140; 220) using a first control signal, the reference field source (140; 220) comprising a defined spatial reference field source distance $(z_1)$ from the magnetic field sensor (110; 210) or a defined spatial distance from a measuring field source (120) $(z_2-z_1)$, and the measuring field source (120) and the reference field source (140; 220) creating, at the location of the magnetic field sensor (110; 210), a magnetic field having a known distance characteristic and a known control characteristic;
sensing a first magnetic field $(By_1)$ which is based on the magnetic field created by the reference field source (140; 220);

controlling the measuring field source (120) using a second control signal;
sensing a second magnetic field $(By_2)$ which is based on the magnetic field created by the measuring field source (120); and
determining the measuring field source distance $(z_2)$ on the basis of a quotient of the first magnetic field component $(By_1)$ and the second magnetic field component (By2), the known distance characteristic and the known control characteristic of the magnetic fields created, and the defined spatial reference field source distance $(z_1)$ from the magnetic field sensor (110; 210) or the defined spatial distance of the reference field source (140; 220) from the measuring field source (120) $(z_2-z_1)$.

15. Computer program having a program code for performing the method as claimed in claim 14, when the computer program runs on a computer.

**Revendications**

1. Dispositif (100; 200) pour déterminer une distance de source de champ de mesure $(z_2)$ entre une source de champ de mesure (120) et un capteur de champ magnétique (110; 210), avec
le capteur de champ magnétique (110; 210) destiné à capter un champ magnétique (By);
un moyen de commande (130; 230) présentant une connexion (232) pour une source de champ de référence (140; 220) à laquelle peut être sorti un premier signal de commande destiné à activer la source de champ de référence (140; 220) par un premier signal de commande pendant une première phase de mesure et une connexion (235) pour la source de champ de mesure (120) à laquelle peut être sorti un deuxième signal de commande pour activer la source de champ de mesure (120) pendant une deuxième phase de mesure; et
un moyen d'évaluation (150; 240) couplé au capteur de champ magnétique (110; 210) et au moyen de commande (130; 230), avec une connexion (245) à laquelle peut être sorti un signal avec une information sur la distance de source de champ de mesure $(z_2)$ sur base d'un quotient d'un champ magnétique $(By_1)$ capté pendant la première phase de mesure et un champ magnétique $(By_2)$ capté pendant la deuxième phase de mesure, une caractéristique de distance connue et une caractéristique de commande connue des champs magnétiques générés de la source de champ de mesure (120) et de la source de champ de référence (140; 220), et une distance de source de champ de référence spatiale définie $(z_1)$ ou une distance spatiale définie $(z_2-z_1)$ de la source de champ de référence (140; 220) par rapport à la source de champ de mesure (120).

2. Dispositif (100; 200) selon la revendication 1, présentant par ailleurs la source de champ de mesure (120) et la source de champ de référence (130; 250), dans lequel la source de champ de référence (130; 250) présente la distance de source de champ de référence spatiale définie $(z_1)$ par rapport au capteur de champ magnétique (110; 210) ou une distance définie par rapport à la source de champ de mesure (120) $(z_2-z_1)$, dans lequel la source de champ de mesure (120) et la source de champ de référence (140; 220) à l'endroit du capteur de champ magnétique (110; 210) génèrent le champ magnétique à la caractéristique de distance connue et la caractéristique de commande connue.

3. Dispositif (100; 200) selon l'une des revendications 1 ou 2, dans lequel la source de champ de mesure (120) présente un conducteur de mesure et la source de champ de référence (140; 220) présente un conducteur de référence, lesquels s'étendent dans la même direction, et dans lequel le capteur de champ magnétique (110; 210) est adapté pour détecter une composante de champ magnétique dans une direction perpendiculaire à l'extension du conducteur de mesure (120) et du conducteur de référence (140; 220), et le moyen de commande (130; 230) est réalisé pour imprimer un premier courant comme premier signal de commande dans le conducteur de référence (140; 220) et pour imprimer un deuxième courant comme deuxième signal de commande dans le conducteur de mesure (120).

4. Dispositif (100; 200) selon l'une des revendications 1 à 3, dans lequel le moyen de commande (130; 230) est réalisé pour prédéterminer pour la source de champ de référence (140; 220) le premier signal de commande et pour la source de champ de mesure (120) le deuxième signal de commande de sorte que les intensités de champ magnétique générées présentent un rapport connu entre elles.

5. Dispositif (100; 200) selon l'une des revendications 1 à 4, dans lequel le moyen de commande (130; 230) et le moyen d'évaluation (150; 240) sont couplés l'un à l'autre, et le moyen de commande (130; 230) est adapté pour activer, pendant la deuxième phase de mesure, la source de champ de mesure (120) de sorte que le champ magnétique $(By_2)$ détecté pendant la deuxième phase de mesure soit égal, dans les limites d'une plage de tolérances, au champ magnétique $(By_1)$ détecté pendant la première phase de mesure, et le moyen d'évaluation (150; 240) est adapté pour déterminer la distance de source de champ de mesure ($z_2$) sur base du rapport des intensités de champ magnétique générées.

**6.** Dispositif (100; 200) selon l'une des revendications 1 à 5, dans lequel le moyen de commande (130; 230) est adapté pour activer la source de champ de référence (140; 220) et en même temps la source de champ de mesure (120) de sorte que les champs magnétiques résultants présentent des polarisations opposées et s'annulent mutuellement dans les limites d'une plage de tolérances et le moyen d'évaluation (150; 240) est adapté pour déterminer la distance de source de champ de mesure ($z_2$) sur base du rapport des intensités de champ magnétiques générées.

**7.** Dispositif (100; 200) selon l'une des revendications 1 à 6, dans lequel le moyen de commande (130; 230) est adapté pour activer, dans une phase de mesure additionnelle, en même temps la source de champ de référence (140; 220) et la source de champ de mesure (120) et le moyen d'évaluation (150; 240) est adapté pour tenir compte, lors de la détermination de la distance de source de champ de mesure ($z_2$), d'une intensité de champ magnétique détectée dans la phase de mesure additionnelle.

**8.** Dispositif (100; 200) selon l'une des revendications 1 à 7, dans lequel le moyen de commande (130; 230) est adapté pour activer, dans une autre phase de mesure, ni la source de champ de référence (140; 220), ni la source de champ de mesure (120) et le moyen d'évaluation (150; 240) est adapté pour tenir compte, lors de la détermination de la distance de source de champ de mesure ($z_2$), d'une intensité de champ magnétique détectée dans l'autre phase de mesure.

**9.** Dispositif (100; 200) selon l'une des revendications 1 à 8, présentant par ailleurs un moyen pour monter de manière mobile le conducteur de mesure (120).

**10.** Dispositif (100; 200) selon l'une des revendications 1 à 9, dans lequel le moyen de commande (130; 230) et le moyen d'évaluation (150; 240) sont réalisés pour réduire les influences du champ magnétique de la terre ou des champs magnétiques parasitaires.

**11.** Dispositif (100; 200) selon l'une des revendications 1 à 10, présentant une deuxième source de champ de mesure et une deuxième source de champ de référence, lesquelles présentent, comparé à la source de champ de mesure (120) et à la source de champ de référence (140; 220), une autre orientation, dans lequel le capteur de champ magnétique (110; 210) est réalisé pour capter d'autres composantes de champ magnétique sur base des intensités de champ magnétique générées de la deuxième source de champ de mesure et de la deuxième source de champ de référence; le moyen de commande (130; 230) est réalisé pour générer des signaux de commande pour la deuxième source de champ de mesure et la deuxième source de champ de référence; et le moyen d'évaluation (150; 240) est réalisé pour tenir compte des autres composantes de champ magnétique détectées lors de la détermination de la distance de source de champ de mesure ($z_2$).

**12.** Dispositif (100; 200) selon l'une des revendications 1 à 11, dans lequel la source de champ de mesure (120) ou la deuxième source de champ de mesure comprend un segment de conducteur de mesure s'étendant sur une membrane.

**13.** Dispositif (100; 200) selon l'une des revendications 1 à 12, dans lequel la source de champ de mesure (120) ou la deuxième source de champ de mesure comporte un segment de conducteur de mesure qui est couplé mécaniquement à un élément micromécanique.

**14.** Procédé pour déterminer une distance de source de champ de mesure ($z_2$) entre un capteur de champ magnétique (110; 210) et une source de champ de mesure (120), aux étapes suivantes consistant à:

activer une source de champ de référence (140; 220) par un premier signal de commande, la source de champ de référence (140; 220) présentant une distance de source de champ de référence spatiale définie ($z_1$) par rapport au capteur de champ magnétique (110; 210) ou une distance spatiale définie par rapport à une source de champ de mesure (120) ($z_2$-$z_1$) et la source de champ de mesure (120) et la source de champ de référence (140; 220) générant à l'endroit du capteur de champ magnétique (110; 210) un champ magnétique avec une caractéristique de distance connue et une caractéristique de commande connue;
détecter un premier champ magnétique ($By_1$) qui est basé sur le champ magnétique généré par la source de champ de référence (140; 220) ;
activer la source de champ de mesure (120) par un deuxième signal de commande;

détecter un deuxième champ magnétique ($By_2$) qui est basé sur le champ magnétique généré par la source de champ de mesure (120); et

déterminer la distance de source de champ de mesure ($z_2$) sur base d'un quotient de la première composante de champ magnétique ($By_1$) et de la deuxième composante de champ magnétique ($By_2$), de la caractéristique de distance connue et de la caractéristique de commande connue des champs magnétiques générés et de la distance de source de champ de référence spatiale définie ($z_1$) par rapport au capteur de champ magnétique (110; 210) ou de la distance spatiale définie de la source de champ de référence (140; 220) par rapport à la source de champ de mesure (120) ($z_2$-$z_1$).

15. Programme d'ordinateur avec un code de programme pour réaliser le procédé selon la revendication 14 lorsque le programme d'ordinateur est exécuté sur un ordinateur.

Fig.1

Fig.2a

Fig.2b

330

335

320

$Z_2$

$Z_1$

Rückleiterabstand ly $>>$ $z_2$

Messebene M

$B_y$

z

y

x

315

300

310

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4346384 A
- US 4945305 A
- DE 69013108 T2
- US 6549004 B1

**In der Beschreibung aufgeführte Nicht-Patentliteratur**

- **PAPERNO ; SASADA ; LEONOVICH.** A New Method for Magnetic Position and Orientation Tracking. *IEEE Transactions on Magnetics,* Juli 2001, vol. 37 (4